# FASCICULE DE BREVET EUROPEEN

(11) **EP 0 822 653 B1**
(45) Date de publication et mention de la délivrance du brevet: **22.08.2001**
(21) Numéro de dépôt: 97401653.7
(22) Date de dépôt: 09.07.1997
(51) Int. Cl.: H02P 7/622

(54) **Dispositif de commande d'un moteur, notamment pour pompe**
Steuervorrichtung für einen Motor, insbesondere für eine Pumpe
Motor control device, especially for a pump

(30) Priorité: 29.07.1996 FR 9609625
(43) Date de publication de la demande: 04.02.1998
(73) Titulaire: Schneider Electric Industries SA, 92500 Rueil-Malmaison (FR)
(72) Inventeur: Chouffier, Jean-Louis, 27120 Menilles (FR); Duclos, Pascal, 75013 Paris (FR)

(56) Documents cités:
- EP-A- 0 030 497
- EP-A- 0 246 769
- EP-A- 0 404 540
- DE-A- 4 312 549
- US-A- 4 841 404

## Description

La présente invention se rapporte à un dispositif de commande d'un moteur au moyen d'un gradateur relié d'une part à un réseau alternatif et d'autre part au moteur, et comprenant un circuit de commande et des interrupteurs électroniques associés aux différentes phases du moteur et pilotés par le circuit de commande, le moteur étant relié mécaniquement à une charge, telle qu'une pompe, afin de l'entraîner.

Un moteur peut être utilisé pour commander l'entraînement d'une pompe servant à la mise en mouvement d'un fluide; la circulation du fluide assure généralement le refroidissement de la mécanique reliant le moteur à la pompe. En cas de désamorçage de la pompe, le refroidissement n'est alors plus assuré et le risque d'échauffement de la mécanique peut alors provoquer sa détérioration, voire même celle du moteur, si la sous-charge est mal détectée.

Actuellement, le contrôle de la détection d'une sous-charge est réalisée soit par la surveillance du courant circulant dans le moteur, soit, comme indiqué dans le brevet EP-A-629037, par la surveillance du facteur de puissance correspondant au déphasage du courant circulant dans le moteur par rapport à la tension aux bornes du moteur.

Cependant, chacun de ces procédés de détection est adapté à une certaine diminution de la charge; pour une diminution jusqu'à 40% environ de la charge, le contrôle par le courant est fiable, mais il est préférable au-delà d'utiliser le contrôle par le facteur de puissance. II est par conséquent nécessaire de connaître à quelle valeur sera estimée l'apparition d'une sous-charge, pour mettre en application l'un ou l'autre procédé de détection au moyen d'un dispositif de mise en oeuvre distinct. Bien entendu, les deux procédés peuvent être mis en application complémentairement, mais le dispositif initial de mise en oeuvre nécessite alors des composants de puissance supplémentaires, ce qui engendre un augmentation du coût du dispositif.

L'invention a par conséquent pour but de réduire le coût de revient de la commande d'un moteur entraînant une charge, avec détection d'un niveau quelconque de sous-charge de celle-ci.

Elle a par ailleurs pour but de détecter une anomalie survenant, soit dans une charge telle qu'une pompe, soit dans un circuit de distribution alimenté par cette charge. Une telle anomalie peut par exemple correspondre à la fermeture d'une vanne de distribution du circuit, le fluide n'étant alors plus débité et restant stocké dans la pompe sans que celle-ci soit par conséquent désamorcée.

L'invention a pour objet un dispositif de commande d'un moteur accouplable à une charge telle qu'une pompe, caractérisé en ce qu'il comprend des moyens de contrôle du couple électromagnétique du moteur comportant un bloc d'estimation du couple du moteur et un comparateur pour déterminer un résultat de comparaison entre la valeur estimée du couple électromagnétique et une valeur de seuil, lesdits moyens de contrôle étant mis en oeuvre lorsque le moteur tourne en vitesse de régime permanent, et le circuit de commande étant apte à bloquer l'alimentation des interrupteurs électroniques du gradateur lorsque le couple électromagnétique est inférieur à la valeur de seuil. Le dispositif de l'invention comprend également au moins un organe de lecture de courant pour fournir un signal représentatif du courant circulant dans au moins une phase du moteur, un organe de calcul de courant pour déterminer en fonction de ce signal la valeur du fondamental du courant dans ladite phase du moteur, et un bloc de mesure du retard à l'amorçage des interrupteurs de ladite phase, relié à un bloc de calcul du retard du fondamental du courant de ladite phase sur la tension simple de la phase correspondante du réseau, la sortie du bloc de calcul et la sortie de l'organe de calcul de courant étant appliquées à des entrées du bloc d'estimation du couple électromagnétique.

En vitesse de régime permanent, les pertes statoriques sont négligeables et la valeur du couple est équivalente à la valeur de la puissance transmise par le réseau au moteur.

La puissance transmise, par conséquent le couple, est de préférence estimée à partir de la valeur du fondamental du courant d'au moins une phase de la charge, et à partir du retard du fondamental du courant de ladite phase par rapport à la tension simple correspondante du réseau. Ce mode de calcul, contrairement au mode de calcul connu utilisant les valeurs instantanées du courant et de la tension sur le moteur, permet de réduire le coût du dispositif de mise en oeuvre du procédé ; il n'est en effet plus nécessaire d'utiliser des capteurs de tension et il suffit d'utiliser au moins un capteur de courant.

L'invention va maintenant être décrite avec plus de détail en se référant à titre d'exemple au dessin annexé :

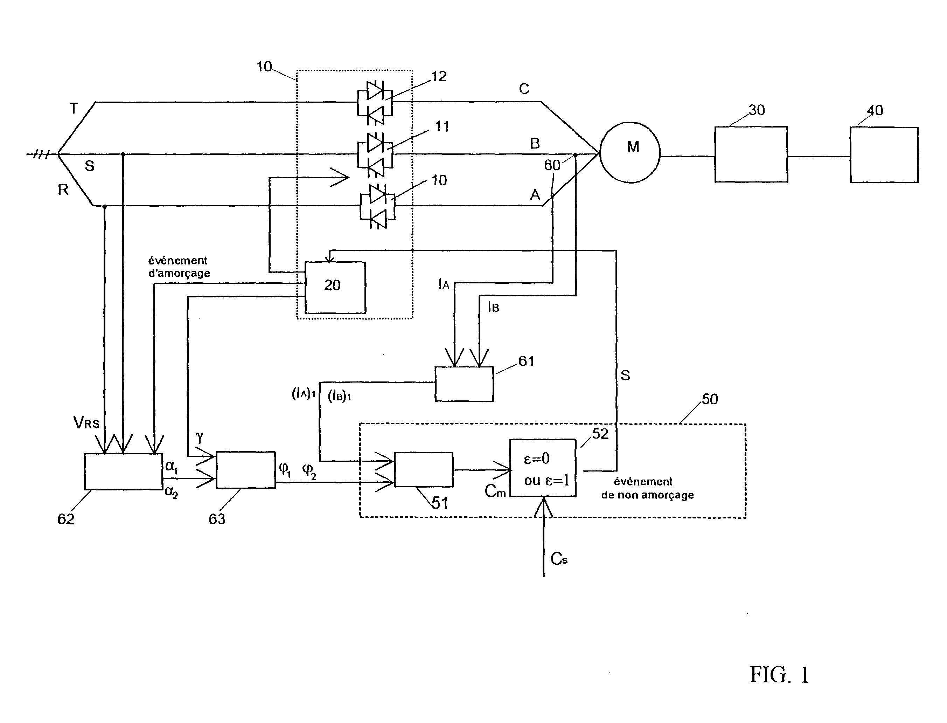

- la figure 1 représente un schéma fonctionnel du dispositif de mise en oeuvre du procédé selon l'invention.

La figure 1 illustre un dispositif de commande d'un moteur électrique M de type asynchrone triphasé. Le moteur M est relié mécaniquement à une charge 30, telle qu'une pompe, pour l'entraîner; la pompe est reliée à un circuit de distribution de fluide 40.

Le procéde de commande du moteur M permet de detecter un niveau de sous-charge de la pompe. On entend par sous-charge toute anomalie survenant dans la pompe, par exemple son désamorçage, ou bien dans le circuit de distribution, par exemple la fermeture d'une vanne engendrant un arrêt du débit de la pompe.

Le moteur M est alimenté à partir d'un réseau alternatif par l'intermédiaire d'un gradateur triphasé 10. Le gradateur 10 comprend trois interrupteurs bidirectionnels à semi-conducteurs 11, 12, et 13; chaque interrupteur est par exemple un couple de deux thyristors montés tête-bêche, et dont le point milieu est connecté, du côté entrée, à un conducteur de phase R, S ou T du réseau, et du côté sortie, à un enroulement de phase A, B ou C respectif du moteur M. Les gâchettes des thyristors sont commandées par un circuit de commande 20 pour rendre ceux-ci passants à des instants choisis afin de moduler les courants des phases du moteur notamment au démarrage et au ralentissement de celui-ci.

Le gradateur 10 permet de démarrer le moteur M et d'accroître sa vitesse jusqu'à une vitesse de régime permanent qui correspond au débit en volume désiré de la pompe si celle-ci est de type volumétrique.

Le dispositif de l'invention comprend des moyens de contrôle 50 du couple électromagnétique Cₘ du moteur. Le couple est représentatif de l'état de charge de la pompe 30. Une diminution du couple Cₘ traduit le fait que le moteur M a besoin de moins de puissance pour entraîner la pompe 30, ce qui implique que, vue depuis le moteur, la pompe est en état de sous-charge.

Les moyens de contrôle 50 comprennent un bloc d'estimation 51 du couple électromagnétique Cₘ du moteur et un comparateur 52 du couple mesuré Cₘ à une valeur de seuil Cₛ. La sortie du bloc 51 est reliée à une entrée du comparateur 52 dont la sortie est appliquée au circuit de commande 20.

En vitesse de régime permanent du moteur, les pertes par effet Joule et les pertes fer statoriques étant négligeables, le couple électromagnétique Cₘ est l'image de la puissance transmise au moteur.

Pour estimer une valeur proportionnelle à la puissance transmis et donc au couple, le dispositif de l'invention comprend des organes de lecture de courant 60, un organe de calcul de courant 61, un bloc 62 d'estimation du retard à l'amorçage α des thyristors et un bloc de calcul 63 du retard ϕ du fondamental de courant sur la tension du réseau. Les organes de lecture de courant 60 sont reliés à l'organe de calcul de courant 61; la sortie du bloc 62 est reliée à une entrée du bloc 63 et les sorties des blocs 63 et 61 sont appliquées à des entrées du bloc 51 d'estimation du couple électromagnétique Cₘ.

Les organes de lecture de courant 60 sont par exemple au nombre de deux, pour fournir des signaux I_{A}, I_{B}, représentatifs des courants circulant dans les phases A et B du moteur. L'organe de calcul 61 situé en aval des organes de lecture 60 permet d'extraire chaque fondamental de courant (I_{A})₁, (I_{B})₁ des signaux I_{A}, I_{B}.

Le bloc 62 est relié à des conducteurs R, S du réseau; il permet d'estimer le retard à l'amorçage α du courant dans les thyristors des phases A et B référencé sur la tension simple du réseau; ce retard correspond au temps écoulé entre l'instant de passage à zéro de la tension simple appliquée à une phase du gradateur côté réseau et l'instant d'amorçage du courant dans les thyristors correspondant à la même phase.

Le bloc 62 reproduit le signal de la tension simple de la phase R du réseau à partir de la mesuré de la tension composée V_{RS} entre les phases R et S du réseau. Un moyen d'évaluation du temps α peut par exemple consister en un compteur interne au bloc 62; le compteur se déclenche à chaque passage à zéro de la tension simple et délivre le temps écoulé α₁ à l'arrivée subséquente de l'événement d'amorçage du courant I_{A} dans le couple 10 de thyristors émis par le circuit de commande 20. De manière identique, le bloc 62 estime et délivre aussi le retard à l'amorçage α₂ pour la phase B du moteur.

Le bloc de calcul 63 reçoit en entrée d'une part les valeurs α₁ et α₂ transmises par le bloc 62, et d'autre part une valeur γ du retard à l'amorçage des thyristors référencée sur le courant et fournie par le circuit de commande 20. Le temps γ correspond au temps écoulé entre l'instant du dernier passage à zéro du courant dans une phase du moteur et l'instant de réamorçage du courant dans cette phase lorsque le courant change de signe.

Le bloc 63 délivre en sortie les valeurs ϕ₁ et ϕ₂ du retard du fondamental du courant (I_{A})₁ sur la tension simple de la phase R du réseau et respectivement du retard du fondamental du courant (I_{B})₁ sur la tension simple de la phase S du réseau. Le bloc 63 réalise le calcul du retard du fondamental à partir de la relation connue ϕ = α- γ/2.

Le bloc de calcul 51 du couple Cₘ reçoit en entrée les valeurs ϕ₁ et ϕ₂ ainsi que les valeurs du fondamental de chaque courant (I_{A})₁, (I_{B})₁. Le bloc 51 calcule en fonction des valeurs d'entrée et délivre en sortie la valeur du couple électromagnétique Cₘ équivalente à la valeur proportionnelle de la puissance transmise au moteur.

Le comparateur 52 compare la valeur estimée du couple électromagnétique Cₘ à une valeur de seuil Cₛ paramétrable. Il établit un résultat de comparaison ε qui à une valeur logique 1 ou bien 0 correspondant, par exemple, respectivement à un défaut ou bien à un fonctionnement normal de la pompe 30 et/ou du circuit de distribution 40. En cas de défaut, le comparateur 52 envoie au circuit de commande 20 un signal d'inhibition S de l'amorçage des thyristors.

Le fonctionnement du dispositif va à présent être décrit.

Le processus est mis en oeuvre lorsque le moteur M a atteint une vitesse de régime permanent.

Les organes de lecture de courant 60 délivrent les signaux de courant I_{A} et I_{B} circulant dans les phases A et B du moteur. A partir de ces signaux sont déduites grâce à l'organe 61 les valeurs du fondamental de chaque courant (I_{A})₁, (I_{B})₁ qui sont envoyées au bloc 51.

Par ailleurs, le bloc 62 estime les valeurs α₁ et α₂ du retard à l'amorçage référencé sur la tension, ces valeurs sont envoyées au bloc 63 qui reçoit aussi la valeur γ du retard à l'amorçage référencé sur le courant. Le bloc 63 distribue à son tour au bloc 51 les valeurs ϕ₁ et ϕ₂ du retard du fondamental du courant sur la tension simple du réseau.

Le bloc de calcul 51 délivre et transmet au comparateur 52 la valeur estimée du couple électromagnétique Cₘ.

Le comparateur 52 effectue la comparaison du couple Cₘ avec la valeur de seuil Cₛ pour laquelle on estime que la pompe est en sous-charge.

Si le résultat de la comparaison ε est un 1 logique correspondant à une anomalie, le comparateur 52 envoie au circuit de commande 20 l'ordre de ne plus amorcer les thyristors de manière à ne plus alimenter le moteur qui s'arrête alors en roue libre.

## Revendications

1. Dispositif de commande d'un moteur (M) au moyen d'un gradateur (10) relié d'une part à un réseau alternatif et d'autre part au moteur, et comprenant un circuit de commande (20) et des interrupteurs électroniques associés aux différentes phases du moteur et pilotés par le circuit de commande, le moteur étant relié mécaniquement à une charge (30), telle qu'une pompe, afin de l'entraîner, caractérisé en ce qu'il comprend :
- des moyens de contrôle (50) du couple électromagnétique (Cₘ) du moteur comportant un bloc d'estimation (51) du couple (Cₘ) du moteur et un comparateur (52) pour déterminer un résultat de comparaison (ε) entre la valeur estimée du couple (Cₘ) et une valeur de seuil (Cₛ), lesdits moyens de contrôle (50) étant mis en oeuvre lorsque le moteur tourne en vitesse de régime permanent, et le circuit de commande (20) étant apte à bloquer l'alimentation des interrupteurs électroniques du gradateur (10) lorsque le couple électromagnétique (Cₘ) est inférieur à la valeur de seuil (Cₛ).
- au moins un organe de lecture de courant (60) pour fournir un signal représentatif du courant circulant dans au moins une phase du moteur,
- un organe de calcul de courant (61) pour déterminer en fonction de ce signal la valeur du fondamental du courant dans ladite phase du moteur,
- un bloc de mesure (62) du retard à l'amorçage des interrupteurs de ladite phase, relié à :
- un bloc de calcul (63) du retard du fondamental du courant de ladite phase sur la tension simple de la phase correspondante du réseau, la sortie du bloc de calcul (63) et la sortie de l'organe de calcul de courant (61) étant appliquées à des entrées du bloc d'estimation (51) du couple électromagnétique (Cₘ).

2. Dispositif selon la revendication 1, caractérisé en ce qu'une sortie du circuit de commande (20) est bouclée sur une entrée du bloc de calcul (63) pour lui délivrer le retard à l'amorçage (γ) des interrupteurs référencé sur le courant.

## Patentansprüche

1. Vorrichtung zur Steuerung eines Motors (M) mittels eines Sanftanlassers (10), der einerseits mit einem Wechselstromnetz und andererseits mit dem Motor verbunden ist, und bestehend aus einem Steuerkreis (20) und aus elektronischen Umschaltern, die mit den verschiedenen Motorphasen verknüpft sind und vom Steuerkreis gesteuert werden, wobei der Motor mechanisch mit einer Last (30), z.B. einer Pumpe, verbunden ist, um diese anzutreiben, dadurch gekennzeichnet, dass sie folgendes umfasst:
- Mittel zur Kontrolle (50) des elektromagnetischen Motormoments (Cₘ), die eine Einheit zur Schätzung (51) des Motormoments (Cₘ) und einen Komparator (52) zur Bestimmung eines Vergleichsergebnisses (ε) zwischen dem geschätzten Wert des Moments (Cₘ) und einem Schwellwert (Cₛ) umfassen, wobei die Kontrollmittel (50) eingesetzt werden, wenn der Motor sich bei einer Geschwindigkeit im eingeschwungenen Zustand dreht, und der Steuerkreis (20) fähig ist, die Versorgung der elektronischen Umschalter des Sanftanlassers (10) zu blockieren, wenn das elektromagnetische Moment (Cₘ) unter dem Schwellwert (Cₛ) liegt,
- mindestens ein Stromablesungsorgan (60), um ein Signal zu ergeben, das den mindestens in einer Motorphase fließenden Strom darstellt,
- ein Stromberechnungsorgan (61), um je nach diesem Signal den Wert der Grundschwingung des Stroms in dieser Motorphase zu bestimmen,
- eine Einheit zur Messung (62) der Zündungsverzögerung der Umschalter dieser Phase, die verbunden ist mit:
- einer Einheit zur Berechnung (63) der Verzögerung der Grundschwingung des Stroms dieser Phase im Verhältnis zur Phasenspannung der entsprechenden Netzphase, wobei der Ausgang der Berechnungseinheit (63) und der Ausgang des Stromberechnungsorgans (61) an die Eingänge der Einheit zur Schätzung (51) des elektromagnetischen Moments (Cₘ) angelegt sind.

2. Vorrichtung nach Anspruch 1, dadurch gekennzeichnet, dass ein Ausgang des Steuerkreises (20) an einen Eingang der Berechnungseinheit (63) zur Schleife geschaltet ist, um daran die auf den Strom bezogene Zündungsverzögerung (γ) der Umschalter abzugeben.

## Claims

1. Control device for a motor (M) using a soft starter (10) connected firstly to an AC network and secondly to the motor, and comprising a control circuit (20) and electronic switches associated with the different motor phases and controlled by the control circuit, the motor being mechanically connected to a load (30) such as a pump in order to drive it, characterised in that it comprises :
- means (50) of controlling the electromagnetic torque (Cₘ) of the motor, comprising an estimating module (51) to estimate the motor torque (Cₘ) and a comparator (52) to determine a comparison result (ε) between the estimated value of the torque (Cₘ) and a threshold value (Cₛ), the said control means (50) being used when the motor is running at a steady speed, and the control circuit (20) being capable of stopping power supply to electronic switches of the soft starter (10) when the electromagnetic torque (Cₘ) is less than the threshold value (Cₛ),
- at least one current reading device (60) to output a signal representing the current circulating in at least one motor phase,
- a current calculation device (61) to determine the value of the current fundamental in the said motor phase as a function of this signal,
- a measurement module (62) measuring the lag in triggering switches in the said phase, connected to:
- a calculation module (63) calculating the lag of the current fundamental of the said phase behind the simple voltage of the corresponding network phase, the output from the calculation module (63) and the output from the current calculation device (61) being applied to the inputs to the estimating module (51) estimating the electromagnetic torque (Cₘ).

2. Device according to claim 1, characterised in that an output from the control circuit (20) is connected to an input to the calculation module (63) to feedback the switch trigger lag (γ) referenced to the current, to the calculation module (63).
